(19) Europäisches Patentamt
European Patent Office
Office européen des brevets

(11) EP 2 976 376 B1

(12) **FASCICULE DE BREVET EUROPEEN**

(45) Date de publication et mention de la délivrance du brevet:
**02.05.2018 Bulletin 2018/18**

(21) Numéro de dépôt: **14715371.2**

(22) Date de dépôt: **17.03.2014**

(51) Int Cl.:
*C08G 81/02* (2006.01) *C08L 87/00* (2006.01)
*C08L 23/08* (2006.01) *C08L 51/06* (2006.01)
*B32B 27/06* (2006.01) *B32B 27/28* (2006.01)

(86) Numéro de dépôt international:
**PCT/FR2014/050611**

(87) Numéro de publication internationale:
**WO 2014/147326 (25.09.2014 Gazette 2014/39)**

(54) **COMPOSITION THERMOPLASTIQUE NANOSTRUCTUREE DE TYPE POLYOLEFINE GREFFEE POLYAMIDE**

NANOSTRUKTURIERTE THERMOPLASTISCHE POLYOLEFINGEPFROPFTE POLYAMIDZUSAMMENSETZUNG

NANOSTRUCTURED THERMOPLASTIC POLYOLEFIN-GRAFTED POLYAMIDE COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2013 FR 1352571**

(43) Date de publication de la demande:
**27.01.2016 Bulletin 2016/04**

(73) Titulaire: **Arkema France**
**92700 Colombes (FR)**

(72) Inventeurs:
- **SABARD, Mathieu**
**F-27470 Serquigny (FR)**
- **BIZET, Stéphane**
**F-27170 Barc (FR)**
- **FLAT, Jean-Jacques**
**F-27170 Goupillieres (FR)**

(74) Mandataire: **Kling, Simone et al**
**ARKEMA France**
**Département Propriété Industrielle**
**420, rue d'Estienne d'Orves**
**92705 Colombes Cedex (FR)**

(56) Documents cités:
**FR-A1- 2 912 150**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### Domaine de l'invention

L'invention a pour objet une composition thermoplastique nanostructurée comprenant de préférence un mélange d'au moins un terpolymère à base d'éthylène et d'un copolymère également à base d'éthylène, ce terpolymère et ce copolymère présentant chacun une quantité non négligeable d'un greffon de type particulier.
L'invention se rapporte également à une structure multicouche dans laquelle au moins une des couches est constituée par la composition selon l'invention.

### Etat de l'art

Il est décrit dans le document WO 02/28959 un copolymère greffé à blocs polyamides sur un tronc en polyoléfine qui est choisi parmi les copolymères éthylène/anhydride maléique et éthylène/(méth)acrylate d'alkyle/anhydride maléique, formant un alliage co-continu nanostructuré; cela confère à ce terpolymère/copolymère des propriétés thermomécaniques exceptionnelles, qui sont maintenues en redispersant ce copolymère greffé dans des polyoléfines souples telles que les polymères souples de l'éthylène.
De tels mélanges trouvent des applications comme adhésifs, films, bâches, produits calandrés, câbles électriques ou poudres pour des procédés de moulage d'objets ("slush molding"). Dans le document WO 2006/085007, une telle composition était utilisée pour constituer une couche de protection thermique d'un substrat subissant des températures supérieures à 150°Celsius (°C).
Ces matériaux sont dits nanostructurés, tels que définis dans les deux documents brevet susmentionnés, ce qui leur confère des propriétés intéressantes au niveau de leurs faibles niveaux de dureté (compris entre 82 et 95 shore A) et de leurs bonnes tenues thermomécaniques au-delà du point de fusion de la phase polyoléfine.
Dans l'état actuel de la technique, on connaît également les produits thermoplastiques utilisés pour des applications qui requièrent basse dureté/tenue thermomécanique qui sont des polymères tels que des élastomères thermoplastiques (par exemple Santoprene® d'Exxon, qui comprend une matrice en polypropylène(PP) dans laquelle est dispersé un copolymère éthylène/propylène/diène (EPDM)), des polymères chlorés (Nakanprene® de Kem One) et des superthermoplastiques vulcanisés (Super TPV) (par exemple du type ETPV de DuPont et TPSiV de Dow Corning Multibase). Ces faibles niveaux de dureté peuvent être obtenus soit, par ajout de plastifiant (impliquant des problèmes d'exsudation), soit, par augmentation de la quantité d'EPDM ce qui implique une diminution considérable de la tenue thermique à des températures supérieures à 150°C. Dans le cas des matériaux vulcanisés, le recyclage peut également être un problème.
Il est donc particulièrement difficile d'allier un niveau de dureté inférieure à 80 shore A et un niveau de module élastique à 150°C supérieur à 1 MPa (Méga Pascal) sans dégrader certaines propriétés du matériau (exsudation, tenue thermique, recyclabilité...).
Par ailleurs, une troisième propriété est importante dans de nombreuses applications, il s'agit de la déformation rémanente à la compression qui doit être la plus faible possible.
Aucun de ces deux types de polymères, qu'il s'agisse de la polyoléfine ou des élastomères greffés polyamide susmentionnés, ne présente des propriétés intéressantes à la fois du point de vue de la dureté (que l'on cherche faible) et du point de vue du module élastique pour des températures élevées alors que ce sont par ailleurs des composants qui présentent une tenue thermomécanique satisfaisante. Il en est de même avec la déformation rémanente à la compression.

### Brève description de l'invention

Il a été constaté par la demanderesse, après diverses expériences et manipulations, que, contrairement aux enseignements bien connues de l'homme du métier, une composition nanostructurée co-continue comportant des quantités déterminées d'un premier copolymère et d'un second copolymère élastomère, ces deux composants étant greffés par un polyamide dans une certaine gamme de pourcentage massique de la composition présente une faible dureté, une tenue thermomécanique et une déformation rémanente à la compression particulièrement améliorées.
Par ailleurs, il a été constaté par la demanderesse qu'une telle composition diluée dans un copolymère à base d'éthylène, de préférence un copolymère d'éthylène et d'acrylate d'alkyle, jusqu'à un rapport 80 % de la composition selon l'invention pour 20% dudit copolymère, permet de conserver intact ou quasi-intact les susdites propriétés de la composition selon l'invention.
Ainsi, la présente invention concerne une composition thermoplastique consistant en un premier copolymère et un second copolymère élastomère, ces deux copolymères étant greffés par une pluralité de greffons polyamide, la composition comprenant éventuellement au moins un adjuvant fonctionnel, caractérisée en ce que :

- le premier copolymère greffé consiste en un tronc en polyoléfine contenant un reste d'au moins un monomère insaturé (X) et une pluralité de greffons en polyamide, les greffons en polyamide sont attachés au tronc en polyoléfine par le reste du monomère insaturé (X) comprenant une fonction capable de réagir par une réaction de condensation avec un polyamide ayant au moins une extrémité amine et/ou au moins une extrémité acide carboxylique, le reste du monomère insaturé (X) est fixé sur le tronc par greffage ou copolymérisation ; et
- le second copolymère consiste en un copolymère élastomère greffé constitué d'un tronc en polyoléfine choisi parmi un copolymère d'éthylène - propylène maléisé, un copolymère éthylène - butène maléisé, un copolymère éthylène - hexène maléisé, un copolymère éthylène - octène maléisé, un copolymère éthylène - méthylacrylate maléisé, et d'une pluralité de greffons en polyamide ;

et en ce que, hors le cas du susdit troisième copolymère présent dans la composition, les rapports massiques suivants sont vérifiés :

- entre 10% et 70% en masse de la composition pour le tronc en polyoléfine du susdit premier copolymère,
- entre 10% et 70% en masse de la composition pour le tronc en polyoléfine du susdit second copolymère,
- entre 15% et 25% en masse de la composition pour les greffons polyamide (fixés sur le premier et le second copolymère).

D'autres caractéristiques avantageuses de l'invention sont précisées dans la suite :

Avantageusement, le monomère insaturé (X) est l'anhydride maléique.

De préférence, le premier copolymère est un terpolymère éthylène/(méth)acrylate d'alkyle/anhydride maléique.
Avantageusement, le susdit polymère greffé est nanostructuré.
Selon une particularité de l'invention, la masse molaire en nombre des susdits greffons polyamide du susdit polymère greffé est comprise dans la gamme allant de 1000 à 10000 g/mole, de préférence comprise entre 1000 et 5000 g/mole.
Avantageusement, les greffons en polyamide comprennent au moins un copolyamide, par exemple 6/11 mono $NH_2$, et/ou un polyamide 6 monofonctionnel $NH_2$ et/ou un polyamide 11 monofonctionnel $NH_2$.
Selon une particularité de l'invention, le susdit premier copolymère et/ou le susdit second copolymère représentent entre 30% et 50% en masse de la composition.
De préférence, les greffons polyamide représentent entre 17% et 23% en masse de la composition, et très avantageusement entre 19% et 21% en masse de ladite composition.
Selon une possibilité offerte par l'invention, l'adjuvant fonctionnel consiste en un plastifiant, un promoteur d'adhésion, un stabilisant UV et/ou un absorbeur UV, un anti-oxydant, un retardateur de flamme et/ou un colorant/azurant.
L'invention concerne également une structure multicouche comportant une pluralité de couches adjacentes, caractérisé en ce qu'au moins une de ces couches consiste en la composition telle que définie précédemment.
Il doit être noté que la composition selon l'invention est présentée en lien avec l'application à un câble électrique (en raison notamment de l'échauffement électrique et des propriétés mécaniques particulières requises) mais bien entendu cette composition pourra être envisagée pour toutes autres applications où une telle composition est avantageusement utilisable, notamment dans les structures multicouches telles que par exemple les skis, les films ou revêtements adhésifs, ou les tubes de transport d'air, de fluides (notamment pour ses caractéristiques de résistance aux attaques chimiques).

## Description détaillée de l'invention

S'agissant du tronc polyoléfine du premier polymère greffé, c'est un polymère comprenant comme monomère une $\alpha$-oléfine.
On préfère les $\alpha$-oléfines ayant de 2 à 30 atomes de carbone.
A titre d'a-oléfine, on peut citer l'éthylène, le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène.
On peut également citer les cyclo-oléfines ayant de 3 à 30 atomes de carbone, préférentiellement de 3 à 20 atomes de carbone, tels que le cyclopentane, le cycloheptène, le norbornène, le 5-méthyl-2-norbomène, le tétracyclododécène, et le 2-méthyl-1,4,5,8-diméthano-1,2,3,4,4a,5,8,8a-octahydronaphthalène ; di et polyoléfines, telles que la butadiène, l'isoprène, le 4-méthyl-1,3-pentadiène, le 1,4-pentadiène, 1,5-hexadiène, 1,3-hexadiène, 1,3-octadiène, 1,4-octadiène, 1,5-octadiène, 1,6-octadiène, l'éthylidènenorbomène, le vinyle norbornène, le dicyclopentadiène, le 7-méthyl-1,6-octadiène, le 4-éthylidiène-8-méthyl-1,7-nonadiène, et le 5,9-diméthyl-1,4,8-décatriène ; les composés vinyliques

aromatiques tels que le mono- ou poly alkylstyrènes (comprenant le styrène, o-méthylstyrène, m-méthylstyrène, p-méthylstyrène, o,p-diméthylstyrène, o-éthylstyrène, m-éthylstyrène et p-éthylstyrène), et les dérivés comprenant des groupes fonctionnels tels que le méthoxystyrène, l'éthoxystyrène, l'acide benzoïque vinylique, le benzoate de méthyle vinyle, l'acétate de benzyle vinyle, l'hydroxystyrène, l'o-chlorostyrène, le p-chlorostyrène, le di-vinyle benzène, le 3-phénylpropène, le 4-phénylpropène, le $\alpha$-méthylstyrène, le vinyle chloride, le 1,2-difluoroéthylène, le 1,2-dichloroéthylène, le tétrafluoroéthylène, et le 3,3,3-trifluoro-1-propène.

Dans le cadre de la présente invention, le terme d'a-oléfine comprend également le styrène. On préfère le propylène et tout spécialement l'éthylène comme $\alpha$-oléfine.

Cette polyoléfine peut-être un homopolymère lorsqu'une seule $\alpha$-oléfine est polymérisée dans la chaîne polymère. On peut citer comme exemples le polyéthylène (PE) ou le polypropylène (PP).

Cette polyoléfine peut aussi être un copolymère lorsqu'au moins deux comonomères sont copolymérisés dans la chaîne polymère, l'un des deux comonomères dit le « premier comonomère » étant une $\alpha$-oléfine et l'autre comonomère, dit « deuxième comonomère », est un monomère capable de polymériser avec le premier monomère.

A titre de deuxième comonomère, on peut citer :

- une des $\alpha$-oléfines déjà citées, celle-ci étant différente du premier comonomère $\alpha$-oléfine,
- les diènes tels que par exemple le 1,4-hexadiène, l'éthylidène norbornène, le butadiène
- les esters d'acides carboxyliques insaturés tels que par exemple les acrylates d'alkyle ou les méthacrylates d'alkyle regroupés sous le terme (méth)acrylates d'alkyles. Les chaînes alkyles de ces (méth)acrylates peuvent avoir jusqu'à 30 atomes de carbone. On peut citer comme chaînes alkyles le méthyle, l'éthyle, le propyl, n-butyl, sec-butyl, isobutyl, tert-butyl, pentyl, hexyl, heptyl, octyl, 2-ethylhexyl, nonyl, decyl, undecyl, dodecyl, tridecyl, tetradecyl, pentadecyl, hexadecyl, heptadecyl, octadecyl, nonadecyl, eicosyl, hencosyl, docosyl, tricosyl, tetracosyl, pentacosyl, hexacosyl, heptacosyl, octacosyl, nonacosyl. On préfère les (méth)acrylates de méthyle, éthyle et butyle comme esters d'acide carboxylique insaturés.
- les esters vinyliques d'acide carboxyliques. A titre d'exemples d'esters vinyliques d'acide carboxylique, on peut citer l'acétate de vinyle, le versatate de vinyle, le propionate de vinyle, le butyrate de vinyle, ou le maléate de vinyle. On préfère l'acétate de vinyle comme ester vinylique d'acide carboxylique.

Avantageusement, le tronc en polyoléfine comprend au moins 50 % en moles du premier comonomère ; sa densité peut être avantageusement comprise entre 0,91 et 0,96.

Les troncs polyoléfines préférés sont constitués d'un copolymère éthylène-(méth)acrylate d'alkyle. En utilisant ce tronc polyoléfine, on obtient une excellente tenue au vieillissement à la lumière et à la température.

On ne sortirait pas du cadre de l'invention si différents « deuxièmes comonomères » étaient copolymérisés dans le tronc polyoléfine.

Selon la présente invention, le tronc polyoléfine contient au moins un reste de monomère insaturé (X) pouvant réagir sur une fonction acide et/ou amine du greffon polyamide par une réaction de condensation. Selon la définition de l'invention, le monomère insaturé (X) n'est pas un « deuxième comonomère ».

Comme monomère insaturé (X) compris sur le tronc polyoléfine, on peut citer :

- les époxydes insaturés. Parmi ceux-ci, ce sont par exemple les esters et éthers de glycidyle aliphatiques tels que l'allylglycidyléther, le vinylglycidyléther, le maléate et l'itaconate de glycidyle, l'acrylate et le méthacrylate de glycidyle. Ce sont aussi par exemple les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate. On préfère utiliser le méthacrylate de glycidyle comme époxyde insaturé.
- les acides carboxyliques insaturés et leurs sels, par exemple l'acide acrylique ou l'acide méthacrylique et les sels de ces mêmes acides.
- les anhydrides d'acide carboxylique. Ils peuvent être choisis par exemple parmi les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On préfère utiliser l'anhydride maléique comme anhydride d'acide carboxylique.

Le monomère insaturé (X) est de préférence un anhydride d'acide carboxylique insaturé.

Selon une version avantageuse de l'invention, le nombre préféré de monomère insaturé (X) fixé en moyenne sur le tronc polyoléfine est supérieur ou égal à 1,3 et/ou préférentiellement inférieur ou égal à 20.

Ainsi, si (X) est l'anhydride maléique et la masse molaire en nombre de la polyoléfine est 15 000 g/mol, on a trouvé que ceci correspondait à une proportion d'anhydride d'au moins 0,8 % en masse de l'ensemble du tronc de polyoléfine et d'au plus 6,5%. Ces valeurs associées à la masse des greffons polyamide déterminent la proportion de polyamide et de tronc dans le polymère greffé polyamide.

Le tronc polyoléfine contenant le reste du monomère insaturé (X) est obtenu par polymérisation des monomères (premier comonomère, deuxième comonomère éventuel, et éventuellement monomère insaturé (X)). On peut réaliser cette polymérisation par un procédé radicalaire à haute pression ou un procédé en solution, en réacteur autoclave ou tubulaire, ces procédés et réacteurs étant bien connus de l'homme du métier. Lorsque le monomère insaturé (X) n'est pas copolymérisé dans le tronc polyoléfine, il est greffé sur le tronc polyoléfine. Le greffage est également une opération connue en soi. La composition serait conforme à l'invention si plusieurs monomères fonctionnels (X) différents étaient copolymérisés et/ou greffés sur le tronc polyoléfine.

Selon les types et ratio de monomères, le tronc polyoléfine peut être semi-cristallin ou amorphe. Dans le cas des polyoléfines amorphes, seule la température de transition vitreuse est observée, tandis que dans celui des polyoléfines semi-cristallins une température de transition vitreuse et une température de fusion (qui sera nécessairement supérieure) sont observées. Il suffira à l'homme du métier de sélectionner les ratios de monomère et les masses moléculaires du tronc polyoléfine pour pouvoir obtenir aisément les valeurs voulues de température de transition vitreuse, éventuellement de température de fusion ainsi que de viscosité du tronc polyoléfine.

De manière préférée, la polyoléfine a un Melt Flow Index (MFI) compris entre 3 et 400 g/10min (190°C, 2,16kg, ASTM D 1238).

Le tronc en polyoléfine du second copolymère greffé est choisi dans une liste restreinte, à savoir parmi un copolymère d'éthylène - propylène maléisé, un copolymère éthylène - butène maléisé, un copolymère éthylène - hexène maléisé, un copolymère éthylène - octène maléisé, un copolymère éthylène - méthylacrylate maléisé.

S'agissant du premier ou du second polymère greffé susmentionné, on utilisera entre 15 et 25% en masse de greffons polyamide, étant considéré la somme des greffons polyamide pour les deux polymères greffés. Ces greffons polyamide viennent se greffer de façon classique, selon l'une des techniques bien connues de l'homme du métier, soit sur l'anhydride maléique du premier copolymère soit sur le monomère fonctionnel du second copolymère (le monomère autre que l'éthylène).

Les greffons polyamide, qu'ils soient présents sur le premier copolymère ou le second copolymère, peuvent être soit des homopolyamides, soit des copolyamides.

Sont notamment visés par l'expression "greffons polyamides" les homopolyamides aliphatiques qui résultent de la polycondensation :

- d'un lactame,
- ou d'un acide alpha, omega-aminocarboxylique aliphatique,
- ou d'une diamine aliphatique et d'un diacide aliphatique.

A titre d'exemples de lactame, on peut citer le caprolactame, l'oenantholactame et le lauryllactame.

A titre d'exemples d'acide alpha, omega-aminocarboxylique aliphatique, on peut citer l'acide aminocaproïque, l'acide amino-7-heptanoïque, l'acide amino-11-undécanoïque et l'acide amino-12-dodécanoïque.

A titre d'exemples de diamine aliphatique, on peut citer l'hexa-méthylènediamine, la dodécaméthylènediamine et la triméthylhexaméthylène diamine.

A titre d'exemples de diacide aliphatique, on peut citer les acides adipique, azélaïque, subérique, sébacique et dodécanedicarboxylique.

Parmi les homopolyamides aliphatiques, on peut citer, à titre d'exemple et de façon non limitative, les polyamides suivants : le polycaprolactame (PA6) ; le polyundécanamide (PA11, commercialisé par ARKEMA sous la marque Rilsan®) ; le polylauryllactame (PA12, également commercialisé par ARKEMA sous la marque Rilsan®) ; le polybutylène adipamide (PA4.6) ; le polyhexaméthylène adipamide (PA6.6) ; le polyhexaméthylène azélamide (PA6.9) ; le polyhexaméthylène sébaçamide

(PA-6.10) ; le polyhexaméthylène dodécanamide (PA6.12) ; le polydécaméthylène dodécanamide (PA10.12) ; le polydécaméthylène sébaçanamide (PA10.10) et le polydodecaméthylène dodécanamide (PA12.12).

Sont également visés par l'expression "polyamides semi-cristallins" les homopolyamides cycloaliphatiques.

On peut notamment citer les homopolyamides cycloaliphatiques qui résultent de la condensation d'une diamine cycloaliphatique et d'un diacide aliphatique.

A titre d'exemple de diamine cycloaliphatique, on peut citer la 4,4'-méthylene-bis(cyclohexylamine), encore

dénommée para-bis(aminocyclo-hexyl)méthane ou PACM, la 2,2'-diméthyl-4,4'méthylène-bis(cyclo-hexyl-amine), encore dénommée bis-(3-méthyl-4-aminocyclohexyl)-méthane ou BMACM.

Ainsi, parmi les homopolyamides cycloaliphatiques, on peut citer les polyamides PACM.12, résultant de la condensation du PACM avec le diacide en C12, les BMACM.10 et BMACM.12 résultant de la condensation de la BMACM avec, respectivement, les diacides aliphatiques en C10 et en C12.

Sont également visés par l'expression "greffons polyamide" les homopolyamides semi-aromatiques qui résultent de la condensation :

- d'une diamine aliphatique et d'un diacide aromatique, tel que l'acide téréphtalique (T) et l'acide isophtalique (I). Les polyamides obtenus sont alors couramment appelés "polyphtalamides" ou PPA ;
- d'une diamine aromatique, telle que la xylylènediamine, et plus particulièrement la métaxylylènediamine (MXD) et d'un diacide aliphatique.

Ainsi, et de manière non limitative, on peut citer les polyamides 6.T, 6.I, MXD.6 ou encore MXD.10.

Les greffons polyamide rentrant en jeu dans la composition selon l'invention sont préférentiellement des copolyamides. Ceux-ci résultent de la polycondensation d'au moins deux des groupes de monomères énoncés ci-dessus pour l'obtention d'homopolyamides. Le terme « monomère » dans la présente description des copolyamides doit être pris au sens d' « unité répétitive ». En effet, le cas où une unité répétitive du PA est constituée de l'association d'un diacide avec une diamine est particulier. On considère que c'est l'association d'une diamine et d'un diacide, c'est-à-dire le couple diamine-diacide (en quantité équimolaire), qui correspond au monomère. Ceci s'explique par le fait qu'individuellement, le diacide ou la diamine n'est qu'une unité structurale, qui ne suffit pas à elle seule à polymériser pour donner un polyamide.

Ainsi, les copolyamides couvrent notamment les produits de condensation :

- d'au moins deux lactames,
- d'au moins deux acides alpha,omega-aminocarboxyliques aliphatiques,
- d'au moins un lactame et d'au moins un acide alpha,omega-aminocarboxylique aliphatique,
- d'au moins deux diamines et d'au moins deux diacides,
- d'au moins un lactame avec au moins une diamine et au moins un diacide,
- d'au moins un acide alpha,omega-aminocarboxylique aliphatique avec au moins une diamine et au moins un diacide,

la(les) diamine(s) et le(s) diacide(s) pouvant être, indépendamment l'un de l'autre, aliphatiques, cycloaliphatiques ou aromatiques.

Selon les types et ratio de monomères, les copolyamides peuvent être semi-cristallins ou amorphes. Dans le cas des copolyamides amorphes, seule la température de transition vitreuse est observée, tandis que dans celui des copolyamides semi-cristallins une température de transition vitreuse et une température de fusion (qui sera nécessairement supérieure) sont observées.

Parmi les copolyamides amorphes que l'on peut utiliser dans le cadre de l'invention, on peut citer par exemple les copolyamides contenant des monomères semi-aromatiques.

Parmi les copolyamides, on pourra également utiliser les copolyamides semi-cristallins et particulièrement ceux de type PA 6/11, PA6/12 et PA6/11/12.

Le degré de polymérisation peut varier dans de larges proportions, selon sa valeur c'est un polyamide ou un oligomère de polyamide.

Avantageusement, les greffons polyamide sont mono fonctionnels.

Pour que le greffon polyamide ait une terminaison monoamine, il suffit d'utiliser un limiteur de chaîne de formule :

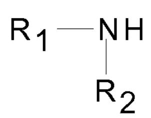

dans laquelle :

- R1 est l'hydrogène ou un groupement alkyle linéaire ou ramifié contenant jusqu'à 20 atomes de carbone,
- R2 est un groupement ayant jusqu'à 20 atomes de carbone alkyle ou alcényle linéaire ou ramifié, un radical cycloaliphatique saturé ou non, un radical aromatique ou une combinaison des précédents. Le limiteur peut être, par exemple, la laurylamine ou l'oleylamine.

Pour que le greffon polyamide ait une terminaison monoacide carboxylique, il suffit d'utiliser un limiteur de chaîne de formule R'1-COOH, R'1-CO-O-CO-R'2 ou un diacide carboxylique.

R'1 et R'2 sont des groupements alkyles linéaires ou ramifiés contenant jusqu'à 20 atomes de carbone.

Avantageusement, le greffon polyamide possède une extrémité à fonctionnalité amine. Les limiteurs monofonctionnels de polymérisation préférés sont la laurylamine et l'oléylamine.

Les greffons polyamide ont une masse molaire comprise entre 1000 et 10000 g/mole, de préférence comprise entre 1000 et 5000 g/mole.

La polycondensation peut être utilisée pour procéder au greffage des greffons de polyamide et s'effectue selon les procédés habituellement connus, par exemple à une température comprise en général entre 200 et 300°C, sous vide ou sous atmosphère inerte, avec agitation du mélange réactionnel. La longueur de chaîne moyenne du greffon est déterminée par le rapport molaire initial entre le monomère polycondensable ou le lactame et le limiteur monofonctionnel de polymérisation. Pour le calcul de la longueur de chaîne moyenne, on compte habituellement une molécule de limiteur de chaîne pour une chaîne de greffon.

Il suffira à l'homme du métier de sélectionner les types et ratio de monomères ainsi que choisir les masses molaires des greffons polyamide pour pouvoir obtenir aisément les valeurs voulues de température de transition vitreuse, éventuellement de température de fusion ainsi que de viscosité du greffon polyamide.

La réaction de condensation du greffon polyamide sur le tronc de polyoléfine (premier ou second copolymère) contenant le reste de X (ou le monomère fonctionnalisé pour le second copolymère greffé, à savoir le copolymère élastomère) s'effectue par réaction d'une fonction amine ou acide du greffon polyamide sur le reste de X. Avantageusement, on utilise des greffons polyamide monoamine et on crée des liaisons amides ou imides en faisant réagir la fonction amine sur la fonction du reste de X.

On réalise cette condensation de préférence à l'état fondu. Pour fabriquer la composition selon l'invention, on peut utiliser les techniques classiques de malaxage et/ou d'extrusion. Les composants de la composition sont ainsi mélangés pour former un compound qui pourra éventuellement être granulé en sortie de filière. Avantageusement, des agents de couplage sont ajoutés lors du compoundage.

Pour obtenir une composition nanostructurée, on peut ainsi mélanger le greffon polyamide et le tronc dans une extrudeuse, à une température généralement comprise entre 200 et 300 °C. Le temps de séjour moyen de la matière fondue dans l'extrudeuse peut être compris entre 5 secondes et 5 minutes, et de préférence entre 20 secondes et 1 minute. Le rendement de cette réaction de condensation est évalué par extraction sélective des greffons de polyamide libres, c'est-à-dire ceux qui n'ont pas réagi pour former le polymère greffé polyamide.

La préparation de greffons polyamide à extrémité amine ainsi que leur addition sur un tronc de polyoléfine contenant le reste de (X) ou d'un monomère fonctionnalisé (second copolymère) est décrite dans les brevets US3976720, US3963799, US5342886 et FR2291225. Le polymère greffé polyamide de la présente invention présente avantageusement une organisation nanostructurée.

Des plastifiants pourront être ajoutés à la composition selon l'invention afin de faciliter la mise en oeuvre et améliorer la productivité du procédé de fabrication de la composition et des structures. On citera comme exemples les huiles minérales paraffiniques aromatiques ou naphtaléniques qui permettent également d'améliorer le pouvoir d'adhérence de la composition selon l'invention. On peut également citer comme plastifiant les phtalates, azelates, adipates, le phosphate de ticrésyle.

De la même manière, des promoteurs d'adhésion, bien que non nécessaires, peuvent être avantageusement ajoutés afin d'améliorer le pouvoir d'adherence de la composition lorsque celui-ci doit être particulièrement élevé. Le promoteur d'adhésion est un ingrédient non polymérique ; il peut être organique, cristallin, minéral et plus préférentiellement semi-minéral semi-organique. Parmi ceux-ci, on peut citer les titanates ou les silanes organiques, comme par exemple les monoalkyl titanates, les trichlorosilanes et les trialkoxysilanes, les trialcooxysilane. On pourra également prévoir que ces promoteurs d'adhésion sont directement greffés sur le premier ou le second copolymère par une technique bien connue de l'homme du métier, par exemple via l'extrusion réactive.

Le rayonnement UV étant susceptible d'entraîner un léger jaunissement des compositions thermoplastiques, des stabilisants UV et des absorbeurs UV (ces composés étant dénommés de manière générale des agents anti-UVs) tels que le benzotriazole, le benzophénone et les autres amines encombrés, peuvent être ajoutés dans certaines applications où un tel phénomène doit être évité. Ces composés peuvent être par exemple à base de benzophénone ou

de benzotriazole. On peut les ajouter dans des quantités inférieures à 10% en masse de la masse totale de la composition et préférentiellement de 0,1 à 5%.

On pourra également ajouter des anti-oxydants pour limiter le jaunissement lors de la fabrication de la composition tels que les composés phosphorés (phosphonites et/ou phosphites) et les phénoliques encombrés. On peut ajouter ces anti-oxydants dans des quantités inférieures à 10% en masse de la masse totale de la composition et préférentiellement de 0,1 à 5%.

De la même manière, dans certaines applications, des agents retardateurs de flamme peuvent également être ajoutés à la composition selon l'invention. Ces agents peuvent être halogénés ou non-halogénés. Parmi les agents halogénés, on peut citer les produits bromés. On peut également utiliser comme agent non-halogéné les additifs à base de phosphore tels que le polyphosphate d'ammonium, les phosphinates et phosphonates d'aluminium, le cyanurate de mélamine, le pentaérythritol, les zéolithes ainsi que les mélanges de ces agents. La composition peut comprendre ces agents dans des proportions allant de 3 à 40% par rapport à la masse totale de la composition. On pourra également ajouter des composés colorants ou azurants.

On peut également ajouter à la composition des pigments comme par exemple des composés colorants ou azurants dans des proportions allant généralement de 5 à 15% par rapport à la masse totale de la composition.

Préparation de la composition selon l'invention :

Comme cela a été mentionné précédemment, la technique de greffage des greffons polyamide sur le tronc polyoléfine pour obtenir la polyoléfine greffé polyamide selon l'invention est bien connu de l'homme du métier, et notamment des documents cités précédemment FR 2912150, FR 2918150 ou EP 21966489.

On ne sort donc pas du cadre de l'invention si des agents réticulant sont ajoutés. On peut citer comme exemples des isocyanates ou des peroxydes organiques. Cette réticulation peut également être réalisée par des techniques connues d'irradiation. Cette réticulation peut être effectuée par l'une des nombreuses méthodes connues de l'homme du métier, notamment par l'utilisation d'initiateurs activés thermiquement, par exemple des composés peroxydes et azo, des photoinitiateurs tels que le benzophénone, par des techniques de radiation comportant des rayons lumineux, des rayons UV, des faisceaux d'électrons et des rayons X, de silanes porteurs de fonctions réactives comme un amino silane, un époxy silane, un vinyle silane tel que par exemple le vinyle silane tri-éthoxy ou tri-méthoxy, et de la réticulation par voie humide. Le manuel intitulé « Handbook of polymer foams and technology » supra, aux pages 198 à 204, fournit des enseignements complémentaires auxquels l'homme du métier peut se référer.

**Matériaux employés pour former les formulations testées :**

**Lotader® 5500:** terpolymère d'éthylène, d'acrylate d'éthyle (15,5 % en poids) et d'anhydride maléique (2,8 % en poids) produit par ARKEMA possédant un MFI (190°C sous 2,16 kg mesuré selon ISO 1133) de 20g/10mn ;

**EPR (« *Ethylene Propylene Rubber »)* Exxelor VA 1803 maléisé** : commercialisé par la société Exxon ;

**Prépolymère Polyamide** : prépolymère polyamide 6 mono NH2 de Mn 2500 g/mole, produit par la demanderesse. Ce prépolymère a été synthétisé par polycondensation à partir du lactame 6. La laurylamine est utilisée comme limitateur de chaîne de façon à avoir une seule fonctionnalité amine primaire en bout de chaîne. La masse molaire moyenne en nombre du prépolymère est de 2500 g/mol.

**Apolhya®** : La famille Apolhya est une famille de polymères commercialisée par ARKEMA qui allient les propriétés des polyamides à celles des polyoléfines grâce à l'obtention de morphologies co-continues à l'échelle manométrique. Il s'agit d'un alliage composé de Lotader® et de prépolymère polyamide 6 mono $NH_2$, par exemple du Lotader® 5500 et du prépolymère PA6 mono NH2 de masse molaire 2500 g/mole.

**Obtention des formulations et films testés :**

Essentiellement trois types de compositions ont été préparées pour réaliser les tests, à savoir une composition de type Apolhya® ci-après désigné « composition n°1 », une composition consistant en un mélange de Lotader® et d'EPR VA 1803 maléisé ci-après désigné « composition n°2 » et une pluralité de compositions consistant en un mélange d'EPR VA 1803 greffé par des prépolymères polyamide et d'Apolhya® et ci-après désigné par les numéros de composition suivants dans lesquels les proportions massiques de chacun des trois composants (EPR VA 1803, greffons de prépolymères de polyamide 6 mono NH2 de masse molaire 2500 g/mole et Lotader® 5500) varient de la façon suivante :

| Composition n° | Lotader® 5500 (% massique de la composition) | EPR VA 1803 (% massique de la composition) | Prépolymères de polyamide 6 (% massique composition) |
|---|---|---|---|
| 3 | 75 | 10 | 15 |
| 4 | 70 | 20 | 10 |
| 5 | 70 | 25 | 5 |
| 6 | 10 | 75 | 15 |
| 7 | 20 | 70 | 10 |
| 8 | 25 | 70 | 5 |
| 9* | 65 | 18 | 17 |
| 10* | 17 | 66 | 17 |
| 11* | 14 | 63 | 23 |
| 12* | 57 | 23 | 20 |
| 13* | 25 | 58 | 17 |
| 14* | 57 | 26 | 17 |
| 15* | 37 | 43 | 20 |
| 16* | 40 | 40 | 20 |
| 17* | 37,5 | 41,5 | 21 |
| * Compositions selon l'invention | | | |

Le « coumpoundage » de chaque composition a été réalisé sur extrudeuse double vis co-rotative de type Leistriz de diamètre 34 mm (millimètre), de longueur 32 fois son diamètre avec un profil plat à 240°C, un débit de 15 kg/h (kilogramme par heure) et une vitesse de rotation de 300 rpm (« round per minute » ou « tour par minute »). Les matières sont introduites en alimentation principale.

**Tests réalisés sur les films** :

Trois types de tests ont été principalement réalisés sur les compositions 1 à 17 afin de tester la résolution éventuellement des problèmes techniques susmentionnés mais il doit être noté que les compositions selon l'invention présentent par ailleurs d'autres propriétés particulièrement intéressantes.

Ces trois tests consistent d'une part à mesurer le module élastique à 150°C, exprimé en MégaPascal (Mpa), à mesurer la dureté Shore à température ambiante et enfin à déterminer la déformation rémanente après compression.

Test du « Module élastique à 150°C »:

Le module élastique à 150°C a été mesuré par DMA (ou « analyseur viscoélastique dynamique »), en tension, à une fréquence de sollicitation de 1 Hz (Hertz). Les mesures ont été menées sur échantillons séchés sous vide à 80°C pendant une nuit.

Pour ces tests mécaniques (y compris le test suivant concernant la dureté Shore), des bandes monocouches de 1 mm d'épaisseur ont été réalisées par extrusion à plat sur une ligne d'extrusion de laboratoire. Il a été utilisé pour cela une extrudeuse bi-vis contrarotative de laboratoire de marque RHEO possédant 2 vis coniques de 31,8 mm de diamètre et 300 mm de long et équipée d'une filière plate de 3 cm (centimètre) de large et de 1 mm d'ouverture. Les éléments de fourreaux sont chauffés selon un profil plat à 210°C ; la vitesse de rotation des vis est de 80 rpm.

Les résultats pour chaque composition sont reproduits dans le tableau ci-après.

| composition n° | 1 | 2 | 3 | 4 | 5 | 6 | 7 | 8 | 9* | 10* | 11* | 12* | 13* | 14* | 15* | 16* | 17* |
|---|---|---|---|---|---|---|---|---|---|---|---|---|---|---|---|---|---|
| résultats du test du module élastique à 150°C | 1 | 0 | 0,9 | 0,8 | 0,6 | 0,5 | 0,4 | 0,3 | 2,5 | 2,6 | 2,5 | 4 | 2 | 3,5 | 2,5 | 2,6 | 2,5 |
| * Compositions selon l'invention | | | | | | | | | | | | | | | | | |

Test de dureté Shore A :

La dureté Shore A a été mesurée selon les spécifications de la norme ISO 868. L'appareil utilisé est un duromètre Hildebrand Shore A. Les essais ont été réalisés à 23°C. On rappelle ici que le cadran du duromètre est gradué en degrés SHORE de 0 à 100, de mou à dur.

Les résultats pour chaque composition sont reproduits dans le tableau ci-dessous.

| composition n° | 1 | 2 | 3 | 4 | 5 | 6 | 7 | 8 | 9* | 10* | 11* | 12* | 13* | 14* | 15* | 16* | 17* |
|---|---|---|---|---|---|---|---|---|---|---|---|---|---|---|---|---|---|
| résultats du test de dureté Shore | 82 | <55 | 81 | 78 | 77 | 66 | 63 | 60 | 79 | 67 | 73 | 79 | 70 | 76 | 75 | 76 | 77 |

* Compositions selon l'invention

Déformation Rémanente à la Compression :

Les essais de déformation rémanente à la compression ont été réalisés selon la norme ISO 815. Il a été appliqué une déformation de 25%. Les échantillons se présentent sous forme de plots injectés de diamètre 29 mm et d'épaisseur 12,5 mm.

Ces plots ont été mis en oeuvre par injection moulage sur presse à injecter de marque KRAUSS MAFFEI. Les paramètres de procédé suivants ont été utilisés :

- température d'injection (alimentation/buse) : 200/220°C
- température du moule : 25°C
- temps de maintien : 40 secondes
- pression de maintien de la matière : 667 bars
- temps de refroidissement : 50 secondes

La déformation rémanente après compression (DRC) est donnée par la formule suivante :

$$DRC\ (\%) = (h_o - h_d) / (h_o - h_c) \times 100$$

où

$h_o$ est la hauteur (épaisseur échantillon) avant le test, ici de 12,5 mm

$h_d$ est la hauteur de l'échantillon mesuré 30 minutes après déformation de 25%

$h_c$ est la hauteur de la cale, ici de 9,40 mm

La déformation rémanente pour chaque plot des compositions 1 à 17 est mesurée dans deux cas, à savoir pendant 24 heures de compression à une température de 23°C et pendant 22 heures de compression à une température de 70°C.

Les résultats pour chaque composition sont reproduits dans le tableau ci-dessous.

| composition n° | 1 | 2 | 3 | 4 | 5 | 6 | 7 | 8 | 9* | 10* | 11* | 12* | 13* | 14* | 15* | 16* | 17* |
|---|---|---|---|---|---|---|---|---|---|---|---|---|---|---|---|---|---|
| DRC (%) à 23°C après 24 heures de compression | 38 | 21 | 37 | 36 | 35 | 31 | 29 | 28 | 36 | 31 | 34 | 37 | 32 | 35 | 35 | 31 | 36 |
| DRC (%) à 70°C après 22 heures de compression | 83 | 44 | 82 | 79 | 78 | 67 | 64 | 61 | 80 | 68 | 74 | 79 | 71 | 77 | 76 | 69 | 78 |
| * Compositions selon l'invention | | | | | | | | | | | | | | | | | |

Les résultats pour les trois tests réalisés sur chacune des compositions montrent clairement d'une part les avantages techniques de la composition selon l'invention, bien que ces derniers ne soient en rien prévisibles, et d'autre part les domaines préférés (% massique) pour cette composition.

## Revendications

**1.** Composition thermoplastique consistant en un premier copolymère et un second copolymère élastomère, ces deux copolymères étant greffés par une pluralité de greffons polyamide, la composition comprenant au moins un adjuvant fonctionnel, **caractérisée en ce que** :

- le premier copolymère greffé consiste en un tronc en polyoléfine contenant un reste d'au moins un monomère insaturé (X) et une pluralité de greffons en polyamide, les greffons en polyamide sont attachés au tronc en polyoléfine par le reste du monomère insaturé (X) comprenant une fonction capable de réagir par une réaction de condensation avec un polyamide ayant au moins une extrémité amine et/ou au moins une extrémité acide carboxylique, le reste du monomère insaturé (X) est fixé sur le tronc par greffage ou copolymérisation ; et
- le second copolymère consiste en un copolymère élastomère greffé constitué d'un tronc en polyoléfine choisi parmi un copolymère d'éthylène - propylène maléisé, un copolymère éthylène - butène maléisé, un copolymère éthylène - hexène maléisé, un copolymère éthylène - octène maléisé, un copolymère éthylène - méthylacrylate maléisé, et d'une pluralité de greffons en polyamide ;

et **en ce que** les rapports massiques suivants sont vérifiés :

- entre 10% et 70% en masse de la composition pour le tronc en polyoléfine du susdit premier copolymère,
- entre 10% et 70% en masse de la composition pour le tronc en polyoléfine du susdit second copolymère,
- entre 15% et 25% en masse de la composition pour les greffons polyamide (fixés sur le premier et le second copolymère).

**2.** Composition selon la revendication 1, **caractérisée en ce que** le monomère insaturé (X) est l'anhydride maléique.

**3.** Composition selon la revendication 2, **caractérisée en ce que** le premier copolymère est un terpolymère éthylène/(méth)acrylate d'alkyle/anhydride maléique.

**4.** Composition selon l'une quelconque des revendications 1 à 3, **caractérisée en ce que** le polymère greffé est nanostructuré.

**5.** Composition selon l'une quelconque des revendications précédentes, **caractérisée en ce que** la masse molaire en nombre des greffons polyamide du polymère greffé est comprise dans la gamme allant de 1000 à 10000 g/mole, de préférence comprise entre 1000 et 5000 g/mole.

**6.** Composition selon l'une quelconque des revendications précédentes, **caractérisée en ce que** les greffons en polyamide comprennent au moins un copolyamide, par exemple 6/11 mono $NH_2$, et/ou un polyamide 6 monofonctionnel $NH_2$ et/ou un polyamide 11 monofonctionnel $NH_2$.

**7.** Composition selon l'une quelconque des revendications précédentes, **caractérisée en ce que** le premier copolymère et/ou le second copolymère représentent entre 30% et 50% en masse de la composition.

**8.** Composition selon l'une quelconque des revendications précédentes, **caractérisée en ce que** les greffons polyamide représentent entre 17% et 23% en masse de la composition, et très avantageusement entre 19% et 21% en masse de ladite composition.

**9.** Composition selon l'une quelconque des revendications précédentes, **caractérisée en ce que** l'adjuvant fonctionnel consiste en un plastifiant, un promoteur d'adhésion, un stabilisant UV et/ou un absorbeur UV, un anti-oxydant, un retardateur de flamme et/ou un colorant/azurant.

**10.** Composition thermoplastique diluée, comprenant en outre de la composition selon l'une des revendications précédentes entre 5% et 20%, de préférence entre 7% et 15% en masse d'un copolymère éthylène/acrylate.

**11.** Structure multicouche comportant une pluralité de couches adjacentes, **caractérisé en ce qu'**au moins une de ces couches consiste en la composition telle que définie à l'une quelconque des revendications précédentes.

## Patentansprüche

**1.** Thermoplastische Zusammensetzung, bestehend aus einem ersten Copolymer und einem zweiten elastomeren Copolymer, wobei diese beiden Copolymere durch mehrere Polyamidpfropfe gepfropft sind, wobei die Zusammensetzung mindestens ein funktionelles Adjuvans umfasst,
**dadurch gekennzeichnet, dass**:

• das erste gepfropfte Copolymer aus einem Polyolefinrumpf besteht, enthaltend einen Rest mindestens eines ungesättigten Monomers (X) und mehrere Polyamidpfropfe, wobei die Polyamidpfropfe am Polyolefinrumpf durch den Rest des ungesättigten Monomers (X) angebracht sind, umfassend eine Funktion, die durch eine Kondensationsreaktion mit einem Polyamid mit mindestens einem Amin-Ende und/oder mindestens einem Carbonsäure-Ende reagieren kann, wobei der Rest des ungesättigten Monomers (X) am Rumpf durch Pfropfen oder Copolymerisation fixiert ist; und
• das zweite Copolymer aus einem gepfropften elastomeren Copolymer besteht, bestehend aus einem Polyolefinrumpf, ausgewählt aus einem maleinisierten Ethylen-Propylen-Copolymer, einem maleinisierten Ethylen-Buten-Copolymer, einem maleinisierten Ethylen-Hexen-Copolymer, einem maleinisierten Ethylen-Octen-Copolymer, einem maleinisierten Ethylen-Methylacrylat-Copolymer, und mehreren Polyamidpfropfen;

und dadurch, dass die folgenden Massenverhältnisse verifiziert sind:

- zwischen 10 Masse-% und 70 Masse-% der Zusammensetzung für den Polyolefinrumpf des obigen ersten Copolymers,
- zwischen 10 Masse-% und 70 Masse-% der Zusammensetzung für den Polyolefinrumpf des obigen zweiten Copolymers,
- zwischen 15 Masse-% und 25 Masse-% der Zusammensetzung für die Polyamidpfropfe (fixiert am ersten und zweiten Copolymer).

**2.** Zusammensetzung nach Anspruch 1,
**dadurch gekennzeichnet, dass** das ungesättigte Monomer (X) Maleinsäureanhydrid ist.

**3.** Zusammensetzung nach Anspruch 2,
**dadurch gekennzeichnet, dass** das erste Copolymer ein Ethylen/Alkyl (meth)acrylat/Maleinsäureanhydrid-Terpolymer ist.

**4.** Zusammensetzung nach einem der Ansprüche 1 bis 3,
**dadurch gekennzeichnet, dass** das gepfropfte Polymer nanostrukturiert ist.

**5.** Zusammensetzung nach einem der vorhergehenden Ansprüche,
**dadurch gekennzeichnet, dass** die zahlenmittlere Molekularmasse der Polyamidpfropfe des gepfropften Polymers im Bereich von 1000 bis 10000 g/mol, vorzugsweise zwischen 1000 und 5000 g/mol, liegt.

**6.** Zusammensetzung nach einem der vorhergehenden Ansprüche,
**dadurch gekennzeichnet, dass** die Polyamidpfropfe mindestens ein Copolyamid umfassen, beispielsweise 6/11 mono-$NH_2$, und/oder ein Polyamid 6-monofunktionelles $NH_2$, und/oder ein Polyamid 11-monofunktionelles $NH_2$.

**7.** Zusammensetzung nach einem der vorhergehenden Ansprüche,
**dadurch gekennzeichnet, dass** das erste Copolymer und/oder das zweite Copolymer zwischen 30 Masse-% und 50 Masse-% der Zusammensetzung bilden.

**8.** Zusammensetzung nach einem der vorhergehenden Ansprüche,
**dadurch gekennzeichnet, dass** die Polyamidpfropfe zwischen 17 Masse-% und 23 Masse-% der Zusammensetzung, und sehr vorteilhaft zwischen 19 Masse-% und 21 Masse-% der Zusammensetzung, bilden.

**9.** Zusammensetzung nach einem der vorhergehenden Ansprüche,

**dadurch gekennzeichnet, dass** das funktionelle Adjuvans aus einem Weichmacher, einem Haftvermittler, einem UV-Stabilisator und/oder einem UV-Absorber, einem Antioxidans, einem Flammhemmer und/oder einem Farbstoff/Aufheller besteht.

**10.** Verdünnte thermoplastische Zusammensetzung, umfassend zusätzlich zur Zusammensetzung nach einem der vorhergehenden Ansprüche zwischen 5 Masse-% und 20 Masse-%, vorzugsweise zwischen 7 Masse-% und 15 Masse-%, eines Ethylen/Acrylat-Copolymers.

**11.** Mehrschichtige Struktur, umfassend mehrere benachbarte Schichten,
**dadurch gekennzeichnet, dass** mindestens eine der Schichten aus der Zusammensetzung, wie in einem der vorhergehenden Ansprüche definiert, besteht.

## Claims

**1.** Thermoplastic composition consisting of a first copolymer and a second elastomeric copolymer, these two copolymers being grafted by a plurality of polyamide grafts, the composition comprising at least one functional adjuvant, **characterized in that**:

- the first grafted copolymer consists of a polyolefin backbone containing a residue of at least one unsaturated monomer (X) and a plurality of polyamide grafts, the polyamide grafts are attached to the polyolefin backbone by the residue of the unsaturated monomer (X) comprising a function capable of reacting by a condensation reaction with a polyamide having at least one amine end group and/or at least one carboxylic acid end group, the residue of the unsaturated monomer (X) is fixed to the backbone by grafting or copolymerization; and
- the second copolymer consists of an elastomeric grafted copolymer consisting of a polyolefin backbone selected from a maleicized ethylene-propylene copolymer, a maleicized ethylene-butene copolymer, a maleicized ethylene-hexene copolymer, a maleicized ethylene-octene copolymer, a maleicized ethylene-methyl acrylate copolymer, and a plurality of polyamide grafts;

and **in that**, the following weight ratios are satisfied:

- between 10% and 70% by weight of the composition for the polyolefin backbone of the abovementioned first copolymer,
- between 10% and 70% by weight of the composition for the polyolefin backbone of the abovementioned second copolymer,
- between 15% and 25% by weight of the composition for the polyamide grafts (fixed to the first and second copolymer).

**2.** Composition according to Claim 1, **characterized in that** the unsaturated monomer (X) is maleic anhydride.

**3.** Composition according to Claim 2, **characterized in that** the first copolymer is an ethylene/alkyl (meth)acrylate/maleic anhydride terpolymer.

**4.** Composition according to any one of Claims 1 to 3, **characterized in that** the grafted polymer is nanostructured.

**5.** Composition according to any one of the preceding claims, **characterized in that** the number-average molar mass of the polyamide grafts of the grafted polymer is within the range from 1000 to 10 000 g/mol, preferably between 1000 and 5000 g/mol.

**6.** Composition according to any one of the preceding claims, **characterized in that** the polyamide grafts comprise at least one copolyamide, for example mono-$NH_2$-terminated 6/11, and/or a monofunctional-$NH_2$-terminated polyamide 6, and/or a monofunctional-NH2-terminated polyamide 11.

**7.** Composition according to any one of the preceding claims, **characterized in that** the first copolymer and/or the second copolymer represent between 30% and 50% by weight of the composition.

**8.** Composition according to any one of the preceding claims, **characterized in that** the polyamide grafts represent between 17% and 23% by weight of the composition, and very advantageously between 19% and 21% by weight

of said composition.

9. Composition according to any one of the preceding claims, **characterized in that** the functional adjuvant consists of a plasticizer, an adhesion promoter, a UV stabilizer and/or a UV absorber, an antioxidant, a flame retardant, and/or a dyeing/whitening agent.

10. Diluted thermoplastic composition, comprising, in addition to the composition according to one of the preceding claims, between 5% and 20%, preferably between 7% and 15%, by weight of an ethylene/acrylate copolymer.

11. Multilayer structure comprising a plurality of adjacent layers, **characterized in that** at least one of these layers consists of the composition as defined in any one of the preceding claims.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0228959 A
- WO 2006085007 A
- US 3976720 A
- US 3963799 A
- US 5342886 A
- FR 2291225
- FR 2912150
- FR 2918150
- EP 21966489 A